# EUROPEAN PATENT APPLICATION

(11) **EP 2 762 310 A1**
(43) Date of publication of application: **06.08.2014**
(21) Application number: 12838738.8
(22) Date of filing: 26.06.2012
(51) Int. Cl.: B32B 27/36, D03D 15/00, D04H 3/045, D06M 17/04

(54) **MESH BODY**

(30) Priority: 06.10.2011 JP 2011221990
(71) Applicant: JX Nippon Oil & Energy Corporation, Chiyoda-ku Tokyo 100-8162 (JP)
(72) Inventor: HARASHIGE, Masahiro, Sanbu-gun Chiba 289-1624 (JP); NAKAZAWA, Shigehisa, Tokyo 100-8162 (JP)
(74) Representative: Style, Kelda Camilla Karen
(86) International application number: PCT/JP2012/066274
(87) International publication number: WO 2013/051312

(57) **Abstract**

A mesh body made of polyethylene terephthalate (PET) having good orientation and having relatively high heat resistance is provided. Each of a split web 1 (longitudinal web) and a slit web 6 (lateral web) has a three-layer structure including a layer (main layer) made of a first thermoplastic resin and bonding layers made of a second thermoplastic resin provided on the respective surfaces of the main layer. The second thermoplastic resin has a heat-sealing property at a temperature lower than a melting point of the first thermoplastic resin. A nonwoven fabric 8 is formed by laminating crosswise a longitudinal web and a lateral web via their bonding layers so that orientation axes of the webs cross perpendicularly to each other. The first thermoplastic resin is PET. The second thermoplastic resin is an amorphous PET copolymer. Before laminating crosswise the webs, their surfaces (bonding layers) are applied with a corona treatment.

## Description

### TECHNICAL FIELD

The present invention relates to a mesh body including uniaxially oriented bodies made of a thermoplastic resin laminated crosswise or woven so that their orientation axes cross each other.

### BACKGROUND ART

Patent Document 1 discloses employing a mesh body (split fiber nonwoven fabric) as a reinforcing material for a mesh structure of a moisture-permeable water-resistant film. This split fiber nonwoven fabric includes two uniaxially oriented bodies laminated crosswise. The uniaxially oriented bodies each has a three-layer structure including a main layer made of a first thermoplastic resin and bonding layers made of a second thermoplastic resin having a melting point lower than that of the first thermoplastic resin and provided on the respective surfaces of the main layer.

### CITATION LIST

### PATENT DOCUMENT

Patent Document 1: Japanese Laid-Open (Kokai) Patent Application Publication No. 2002-210884

### SUMMARY OF THE INVENTION

### PROBLEMS TO BE SOLVED BY THE INVENTION

The abovementioned mesh body is employed, for example, as a supporting body (shape-maintaining member) for an automotive air filter. At a time of producing such an air filter, for example, cotton is bonded to such a mesh body by using, for example, an adhesive agent. In view of production efficiency, this bonding step is required to be performed at a relatively high temperature (for example, at 200°C) in a short time. Thus, in order to improve heat resistance of a mesh body, recently, it has been examined to employ, as the abovementioned supporting body, a mesh body made of polyethylene terephthalate having a relatively high melting point (about 260°C) instead of mesh bodies made of polyethylene or polypropylene having relatively low meting points.

However, if uniaxially oriented bodies each having a single-layer structure of polyethylene terephthalate are employed as uniaxially oriented bodies constituting a mesh body and such uniaxially oriented bodies are thermally fusion-bonded to be laminated crosswise, there is a possibility that the uniaxially oriented bodies are heated to a temperature higher than the melting point and the orientation of the uniaxially oriented bodies is collapsed. As a result, the strength (tensile strength) of the uniaxially oriented bodies in the axial direction may be reduced.

Therefore, the uniaxially oriented body made of polyethylene terephthalate needs to have a laminate structure of at least two layers including a layer of polyethylene terephthalate (main layer) and a layer (bonding layer) of a resin having a heat-sealing property at a temperature lower than the melting point of the main layer, rather than the abovementioned single layer structure. Here, the heat-sealing property means a property that uniaxially oriented bodies laminated crosswise or woven can be bonded together by applying a heat and a pressure to them.

However, a suitable resin for a bonding layer for the main layer made of polyethylene terephthalate has not been found.

In view of such a conventional problem, and it is an object of the present invention to provide a mesh body made of polyethylene terephthalate having good orientation and having relatively high heat resistance.

### MEANS FOR SOLVING THE PROBLEMS

In order to achieve the object, the mesh body according to the present invention includes uniaxially oriented bodies each including a main layer made of a first thermoplastic resin and a bonding layer provided on at least one side of the main layer and made of a second thermoplastic resin having a heat-sealing property at a temperature lower than a melting point of the first thermoplastic resin, and the uniaxially oriented bodies are laminated crosswise or woven via the bonding layer so that their orientation axes cross each other to form the mesh body. Here, the first thermoplastic resin is polyethylene terephthalate, and the second thermoplastic resin is an amorphous polyethylene terephthalate copolymer.

### EFFECTS OF THE INVENTION

According to the present invention, the second thermoplastic resin constituting the bonding layer of the uniaxially oriented body is an amorphous polyethylene terephthalate copolymer. Consequently, it is possible to bond the bonding layers of the uniaxially oriented bodies each other at a temperature lower than the melting point of the main layer (polyethylene terephthalate), and accordingly, it is possible to form a mesh body while maintaining good orientation of the uniaxially oriented bodies.

Furthermore, according to the present invention, since the main layer of each uniaxially oriented body is made of polyethylene terephthalate, a mesh body can have relatively high heat resistance as compared with a case in which the main layer is made of polyethylene or polypropylene.

### BRIEF DESCRIPTION OF THE DRAWINGS

FIG.1 is a schematic configuration view of a split web constituting a first example of a mesh body of an embodiment of the present invention.
FIG.2 is a partial enlarged view of the P portion of FIG. 1.
FIG.3 is a schematic configuration view of a slit web constituting the first example of the mesh body of the above embodiment.
FIG.4 is a partial enlarged view of the Q portion of FIG. 3.
FIG.5 is a schematic configuration view of a uniaxially oriented tape constituting second and third examples of the mesh body of the above embodiment.
FIG. 6 is a partial plan view showing a schematic configuration of a nonwoven fabric that is a first example of the mesh body of the above embodiment.
FIG. 7 is a partial plan view showing a schematic configuration of a nonwoven fabric that is a second example of the mesh body of the above embodiment.
FIG. 8 is a partial perspective view shown a schematic configuration of a woven fabric that is a third example of the mesh body of the above embodiment.
FIG. 9 is a view showing a method for producing the split web of the above embodiment.
FIG. 10 is a view showing a first example of the method for producing a mesh body of the above embodiment.
FIG. 11 is a view showing a corona treatment apparatus.
FIG. 12 is a view showing a second example of the method for producing a mesh body of the above embodiment.
FIG. 13 is a view showing a modified example of the split web of the above embodiment.
FIG. 14 is a view showing a modified example of the slit web of the above embodiment.
FIG. 15 is a view showing a modified example of the uniaxially oriented tape of the above embodiment.

### MODES OF CARRING OUT THE INVENTION

Hereinafter, embodiments of the present invention will be described with reference to the accompanying drawings.

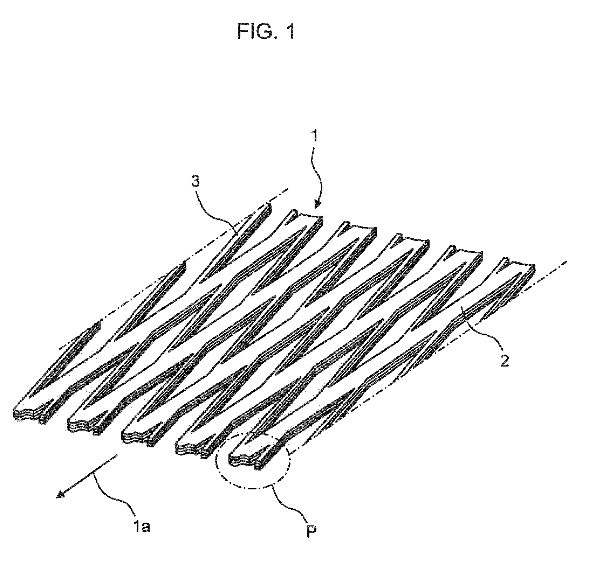

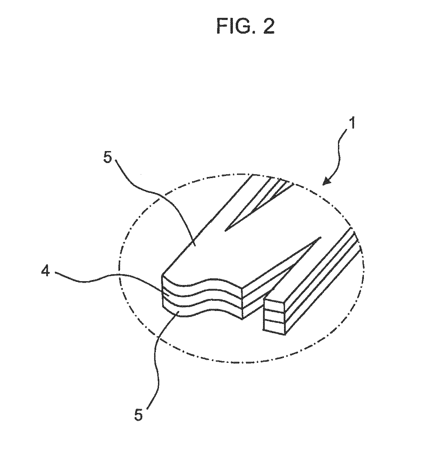

Figs.1 and 2 show a uniaxially oriented body constituting a first example of a mesh body according to an embodiment of the present invention.

A split web 1 shown in FIG. 1 corresponds to the uniaxially oriented body of the present invention, and the split web 1 is formed by uniaxially stretching a film made of a thermoplastic resin in the longitudinal direction (axial direction of an orientation axis 1 a of the split web 1), splitting the film in the longitudinal direction, and extending the film in the width direction. In more detail, the split web 1 is formed by employing a first thermoplastic resin and a second thermoplastic resin having a heat-sealing property at a temperature lower than a melting point of the first thermoplastic resin, forming these resins into a multilayer film of at least two layers (three layers in FIG. 1) by using a forming method such as a multilayer T-die method, stretching the multilayer film in the longitudinal direction (length direction), forming splits of the film (split treatment) in a catch stitch form in the longitudinal direction by using a splitter to form a mesh-form film, and further extending the film in the width direction to have a predetermined width. Furthermore, the split web 1 has relatively high strength in the longitudinal direction over the entire width. Here, reference sign 2 in FIG. 1 corresponds to a main fiber, and reference sign 3 corresponds to a branch fiber.

FIG. 2 is a partial enlarged view of the P portion of FIG. 1, which shows that the split web 1 has a three-layer structure including a layer (main layer) 4 of a first thermoplastic resin and layers 5 of a second thermoplastic resin provided on the respective surfaces of the layer 4. The layers 5 of the second thermoplastic resin can function as bonding layers to bond webs when the split web 1 is laminated crosswise with a slit web 6 to be described later at a time of forming a nonwoven fabric 8 (first example of mesh body) to be described later.

Here, the first thermoplastic resin is polyethylene terephthalate (thereinafter referred to as "PET") having a melting point of about 260°C.

Furthermore, the second thermoplastic resin is an amorphous polyethylene terephthalate copolymer (hereinafter referred to as "amorphous PET copolymer") having a heat-sealing property at a temperature lower than a melting point of the first thermoplastic resin.

The amorphous PET copolymer is produced by substituting a part of ethylene glycol, that is a diol component of PET, by a comonomer. As this comonomer to be used as the diol component, for example, 1,4-cyclohexane dimethanol (CHDM), neopentyl glycol (NPG), 1,4-buthane diol (BDO), or 1,3-propane diol (PDO) may be employed. In particular, an amorphous PET copolymer containing CHDM as the comonomer is commonly called as PET-G.

Furthermore, the amorphous PET copolymer may be produced by substituting a part of terephthalic acid, that is a dicarboxylic acid component of PET, by a comonomer. As this comonomer to be used as the dicarboxylic acid component, for example, IPA may be employed.

Since crystallization of the amorphous PET copolymer is suppressed by the comonomer, the amorphous PET copolymer has a heat-sealing property at a temperature lower than the melting point of PET.

As the proportion of the comonomer in the amorphous PET copolymer is increased, crystallization is further suppressed and the capability of the bonding layer for bonding webs is further improved.

However, the present inventors have found that if the proportion of the comonomer in the amorphous PET copolymer is too high, the abovementioned splitting (splitting treatment) cannot be performed well.

That is, the present inventors have found that, in the amorphous PET copolymer, it is necessary to set the proportion of the comonomer in view of adhesiveness of the layer 5 and workability of the splitting (splitting treatment).

The present inventors have found that, in terms of diol component of the amorphous PET copolymer, when the ratio (molar ratio) between the comonomer and ethylene glycol is preferably from 9:91 to 50:50, more preferably from 15:85 to 30:70 (in other words, when the ratio (molar ratio) of the comonomer in the diol component is preferably from 9 mol% to 50 mol%, more preferably from 15 mol% to 30 mol%), it is possible to achieve both good adhesiveness of layer 5 and good workability of the splitting (splitting treatment).

Accordingly, in this embodiment, the ratio (molar ratio) between the comonomer and ethylene glycol is set based on the abovementioned knowledge.

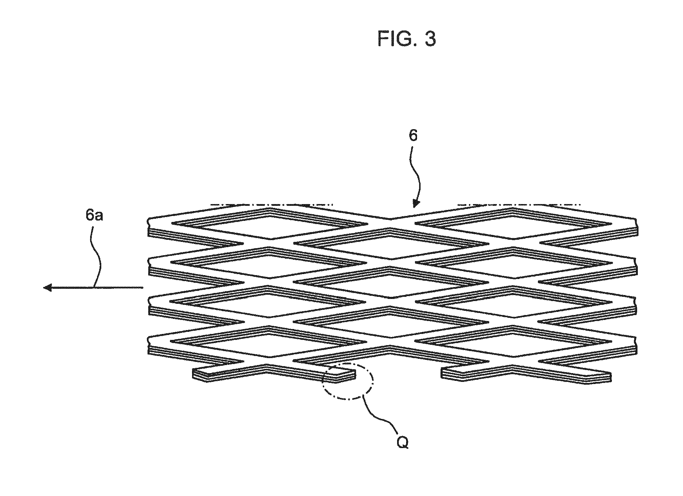

The slit web 6 shown in FIG.3 corresponds to the uniaxially oriented body of the present invention, which is formed by forming many slits in the lateral direction in a thermoplastic resin film (axial direction of the orientation axis 6a of the slit web 6), and uniaxially stretching the film in the lateral direction. In more detail, the slit web 6 is formed by forming parallel intermittent slits in, for example, a catch stitch form by using, for example, a heated blade in the lateral direction (width direction) in a portion of the multi-layer film other than both ear portions thereof, and stretching the film in the lateral direction. Furthermore, the slit web 6 has relatively high strength in the lateral direction.

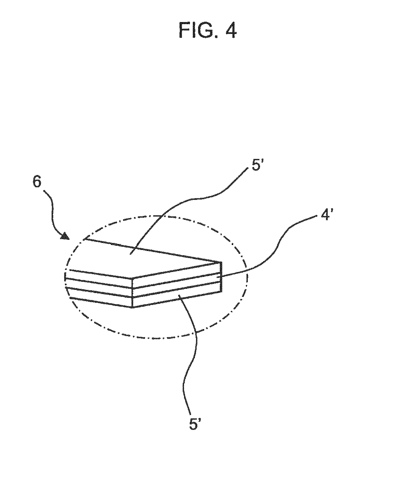

FIG. 4 is a partial enlarged view of the Q portion of FIG. 3, which shows that the slit web 6 has a three-layer structure including a layer (main layer) 4' of a first thermoplastic resin and layers 5' of a second thermoplastic resin provided on the respective sides of the layer 4'. The layers 5' of the second thermoplastic resin functions as bonding layers to bond webs when the slit web 6 is laminated crosswise with the split web 1 at a time of forming the nonwoven fabric 8 (first example of mesh body) to be described later. Here, the first thermoplastic resin of the layer 4' is PET that is the same as the first thermoplastic resin of the layer 4. Furthermore, the second thermoplastic resin of layer 5' is an amorphous PET copolymer that is the same as the second thermoplastic resin of the layer 5.

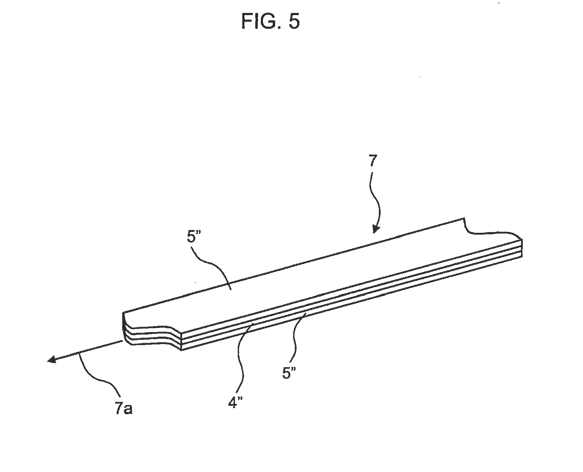

FIG. 5 shows a uniaxially oriented body constituting second and third examples of the mesh body of this embodiment.

A uniaxially oriented tape 7 shown in FIG. 5 corresponds to the uniaxially oriented body of the present invention. The uniaxially oriented tape 7 is a multi-layer stretched tape produced by employing a first thermoplastic resin and a second thermoplastic resin having a heat-sealing property at a temperature lower than a melting point of the first thermoplastic resin, forming these resins into a multilayer film of at least two layers (three layers in FIG. 5) by using a forming method such as a multilayer T-die method, uniaxially orienting the multilayer film in the longitudinal direction or the lateral direction, and cutting the film into the multi-layer stretched tape. In the same manner as the split web 1 and the slit web 6, the uniaxially oriented tape 7 shown in FIG. 5 has a three-layer structure including a layer (main layer) 4" of a first thermoplastic resin and layers 5" of a second thermoplastic resin provided on the respective surfaces of the layer 4". The layers 5" of the second thermoplastic resin function as bonding layers to bond tapes when the uniaxially oriented tapes 7 are laminated crosswise with each other at a time of forming a nonwoven fabric 9 (second example of mesh body) to be described later. Furthermore, the layers 5" of the second thermoplastic resin function as bonding layers to bond tapes when the uniaxially oriented tapes 7 are woven at a time of forming a woven fabric 10 (third example of mesh body) to be described later. Here, reference sign 7a in FIG. 5 corresponds to an orientation axis of the uniaxially oriented tape 7. Here, the first thermoplastic resin of the layer 4" is PET that is the same as the first thermoplastic resin of the layer 4. Furthermore, the second thermoplastic resin of the layer 5" is an amorphous PET copolymer that is the same as the second thermoplastic resin of the layer 5.

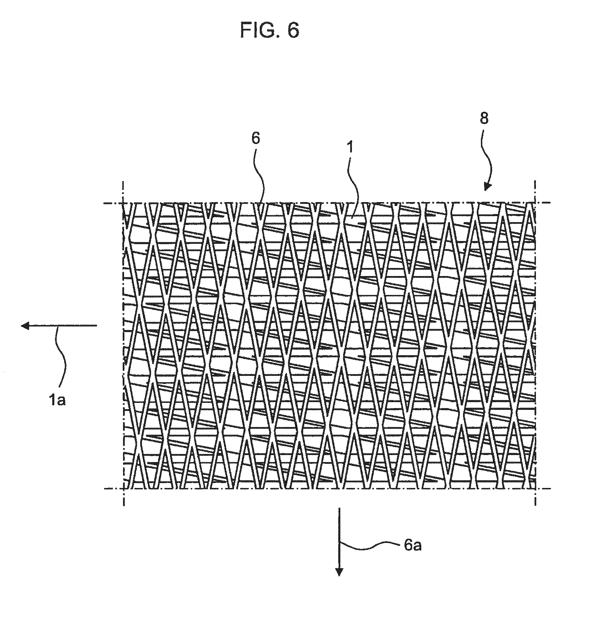

Figs. 6 to 8 show three examples of mesh body of this embodiment (first to third examples of the abovementioned mesh body).

FIG. 6 shows the nonwoven fabric 8 that is the first example of mesh body of this embodiment. The nonwoven fabric 8 is formed by laminating crosswise the split web 1 and the slit web 6. In the nonwoven fabric 8, the split web 1 and the slit web 6 are laminated crosswise so that the orientation axis 1 a of the split web 1 and the orientation axis 6a of the slit web 6 cross perpendicularly to each other. Furthermore, in the nonwoven fabric 8, contact portions of laminated split webs 1 are surface-bonded to each other.

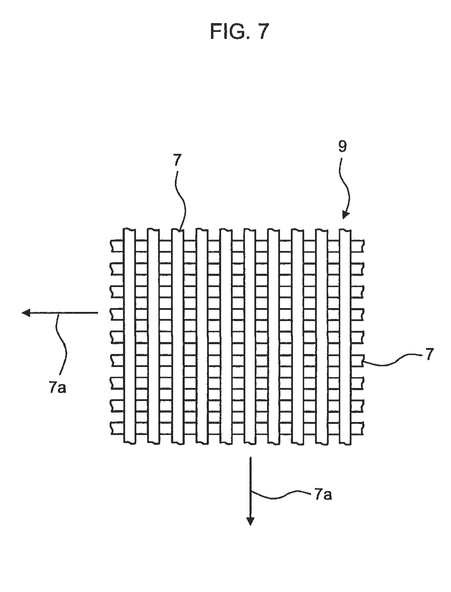

FIG. 7 shows the nonwoven fabric 9 that is a second example of mesh body of this embodiment. The nonwoven fabric 9 is formed by laminating two groups each including uniaxially oriented tapes 7 arranged in parallel. In the nonwoven fabric 9, the groups are laminated crosswise so that the orientation axis 7a of the uniaxially oriented tapes 7 of one group crosses perpendicularly the orientation axis 7a of the uniaxially oriented tapes 7 of the other group. Furthermore, in the nonwoven fabric 9, contact portions of the laminated uniaxially oriented tapes 7 are surface-bonded to each other.

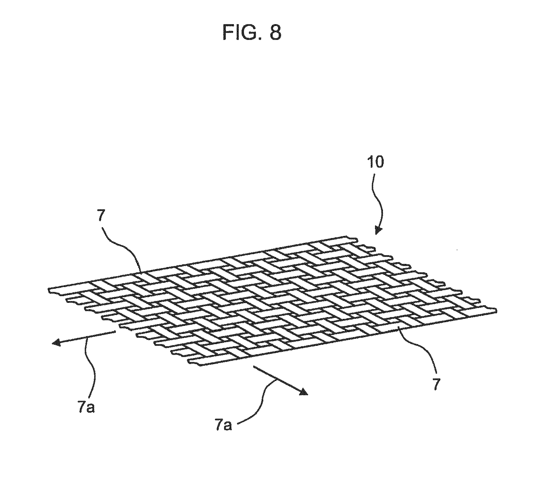

FIG. 8 shows a woven fabric 10 that is a third example of mesh body of this embodiment. The woven fabric 10 is formed by weaving the uniaxially oriented tapes 7. In the woven fabric 10, the uniaxially oriented tapes 7 cross perpendicularly to each other, and accordingly, orientation axes 7a thereof are perpendicular to each other. Furthermore, in the woven fabric 10, contact portions of the perpendicularly crossing uniaxially oriented tapes 7 are surface-bonded to each other.

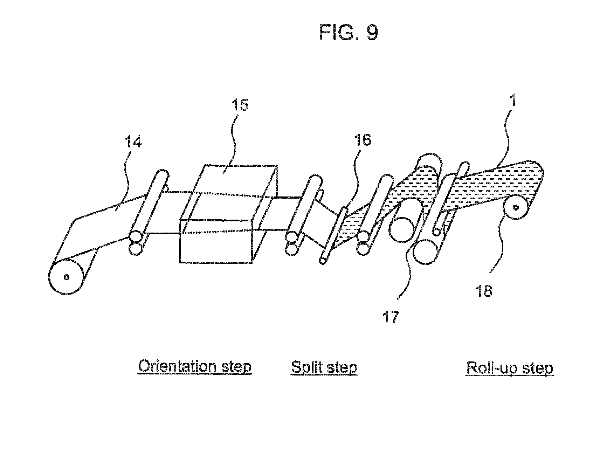

Next, an example of the method for producing the uniaxially oriented body of this embodiment will be described with reference to FIG. 9.

FIG. 9 schematically illustrates an example of the method for producing the split web 1 that is the uniaxially oriented body.

As illustrated in FIG. 9, the split web 1 is produced through, as main steps, (1) an orientation step of the multi-layer film, (2) a split step of splitting the oriented multi-layer film in parallel to an orientation axis, and (3) a roll-up step of rolling-up the split film.

Hereinbelow, each of the steps will be explained. In FIG. 9, in the (1) orientation step, a multi-layer film 14 having a three-layer structure including the abovementioned first and second thermoplastic resins, the multi-layer film 14 that has been produced in advance by a forming method such as a multi-layer T-die method and rolled-up, is conveyed through an oven 15 provided with an infrared heater, a hot air supplier, and the like to be heated to a predetermined temperature, and meanwhile, a roll orientation is performed with a predetermined orientation magnification with respect to an initial dimension.

In the (2) split (slitting) step, the oriented multi-layer film is made to slide-contact with a splitter (rotating blade) 16 rotating at a high speed to perform a split treatment (splitting).

The split web 1 formed by the splitting is extended in the width direction to have a predetermined width, applied with a heat treatment in a heat treatment unit 17, and rolled up in the (3) roll-up step to be a rolled body 18 with a predetermined length of the split web 1.

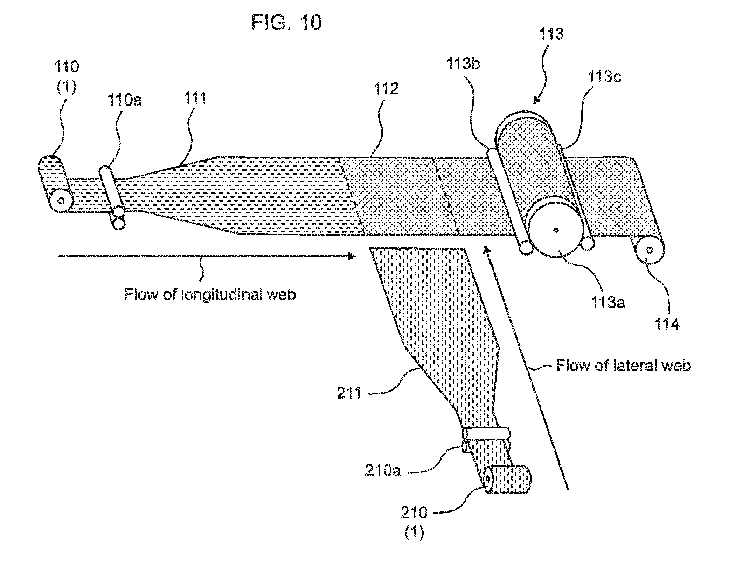

Next, two examples of the method for producing a mesh body of this embodiment will be described with reference to Figs. 10 to 12.

FIG. 10 shows, as a first example of the method for producing a nonwoven fabric including a laminate of two split webs 1.

In FIG. 10, a split web 110 (longitudinal web) produced in the manner shown in FIG. 9 is rolled out from an original-cloth roll-out roll 110a, fed at a predetermined feeding speed to a width-extending step 111 to extend the width to several times by a width-extender (not illustrated), and applied with a heat treatment as the case requires.

Thereafter, a surface (layer 5) of the longitudinal web (split web 110) of which width is extended, is applied with a corona treatment.

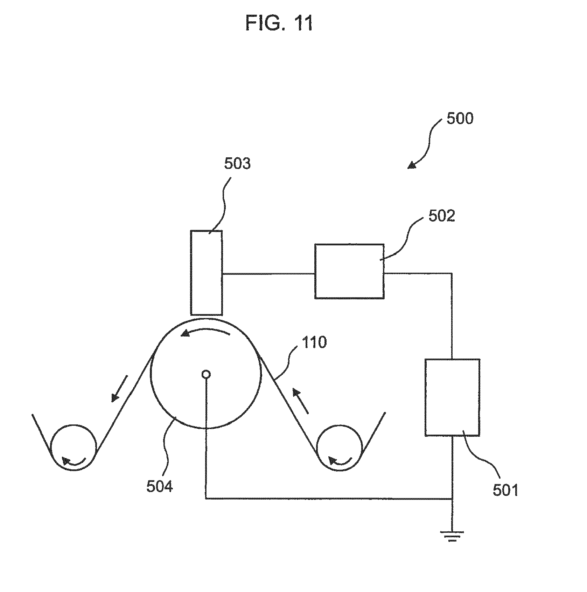

FIG. 11 shows a corona treatment apparatus to be employed for the corona treatment.

As shown in FIG. 11, the corona treatment apparatus 500 has a high frequency power source 501, a controller 502 and an electrode 503. The longitudinal web (split web 110) of which width is extended, is hung up around a treatment roll 504, that is grounded, and fed at a predetermined speed through the vicinity of an electrode 503. Then, a high frequency-high voltage generated by the power source 501 is applied to a space between the electrode 503 and the treatment roll 504 to thereby generate corona discharge. By feeding the longitudinal web though the corona discharge and thereby applying energy of the discharge on the longitudinal web, wettability of a surface (layer 5) of the longitudinal web is improved to improve the adhesiveness.

Returning to FIG. 10, another split web 210 (lateral web) is, rolled out from an original-cloth roll-out roll 210a in the same manner as the longitudinal web, the web is fed at a predetermined feeding speed to a width-extending step 211 to extend the width to several times by a width-extender (not illustrated), and applied with a heat treatment as the case requires.

Thereafter, a surface (layer 5) of the lateral web of which width is extended, is also applied with a corona treatment in the same manner as the longitudinal web.

Then, the lateral web is cut into a length equal to the width of the longitudinal web, and supplied from a direction perpendicular to the film-feeding direction of the longitudinal web. In a lamination step 112, the webs are laminated crosswise via a bonding layer (second thermoplastic resin layer 5) so that orientation axes of the respective webs cross perpendicularly to each other. In a thermo-compression bonding step 113, the longitudinal web and the lateral web, that have been laminated crosswise, are fed between a hot cylinder 113a of which circumferential surface is a mirror surface and mirror surface rolls 113b, 113c to be applied with a nip pressure. Consequently, the longitudinal web and the lateral web are thermally compression-bonded to each other to be integrated. Furthermore, contact portions of the longitudinal web and the lateral web are entirely surface-bonded. An integration of the longitudinal web and the lateral web thus produced is rolled up in a roll-up step to be a rolled body 114 of crosswisely laminated nonwoven fabric.

Here, in FIG. 10, instead of split webs 110 and 210, it is also possible to convey the woven fabric 10, including the uniaxially oriented tapes 7 that have been applied with the corona treatment, to the thermo-compression bonding step 113 and guide the woven fabric 10 between a hot cylinder 113a and mirror-surface rolls 111 b, 113c to apply a nip pressure. In this case, by applying the nip pressure to the woven fabric 10, uniaxially oriented tapes 7 constituting the woven fabric 10 are thermo-compression-bonded to be integrated. Furthermore, contact portions of the perpendicularly crossing uniaxially oriented tapes 7 are entirely surface-bonded.

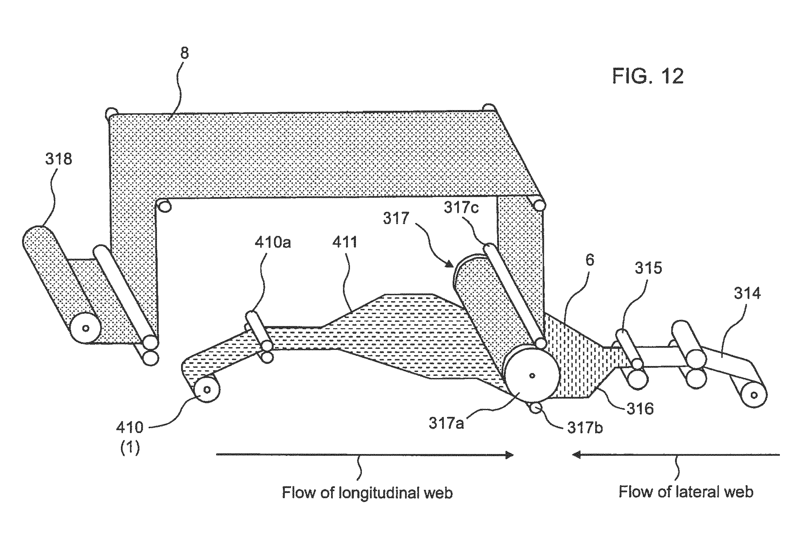

FIG. 12 shows, as a second example of the method for producing a mesh body of this embodiment, a method for producing a nonwoven fabric 8 that is a laminate of a split web 1 and a slit web 6.

The method for producing such a nonwoven fabric 8 includes, as main steps, (1) a slit step of performing a slit treatment in a direction perpendicular to the longitudinal direction of a multilayer film, (2) an orientation step of the multilayer film, and (3) a compression-bonding step of laminating a lateral web (slit web 6) and a longitudinal web (split web 1) and thermo-compression bonding them.

Each of the steps will be described below. In FIG. 12, in (1) the slit step, a multi-layer film 314 having a three-layer structure including the abovementioned first and second thermoplastic resins, the multi-layer film 314 that has been produced in advance by a forming method such as a multi-layer T-die method and rolled-up, is applied with a lateral slit step 315 to form lateral slits in the film in a direction perpendicular to a feeding direction of the film in a catch-stitch form.

In the (2) orientation step, lateral orientation is applied in a lateral orientation step 316 to the film to which the slit treatment has been applied. A surface (layer 5') of a slit web 6 (lateral web) thus obtained is applied with the abovementioned corona treatment, and the slit web 6 is conveyed to the (3) thermo-compression bonding step 317.

Meanwhile, a split web 410 (longitudinal web) is rolled out from an original-cloth roll-out roll 410a in the same manner as the longitudinal web of FIG. 10, the web is fed at a predetermined feeding speed to a width-extending step 411 to extend the width thereof to several times by a width-extender (not illustrated), and applied with a heat treatment as the case requires. Thereafter, a surface of the longitudinal web is applied with the corona treatment, and the longitudinal web is conveyed to a thermo-compression bonding step 317, and in the thermo-compression bonding step 317, the longitudinal web and a lateral web are laminated so that orientation axes of the respective webs cross perpendicularly to each other and thermo-compression bonded. Specifically, the webs are fed between a hot cylinder 317a of which circumferential surface is a mirror surface and mirror surface rolls 317b, 317c to apply a nip pressure to thereby thermo-compression bond them to each other to integrate them. Consequently, contact portions of the longitudinal and lateral webs are entirely surface-bonded. The integrated longitudinal and lateral webs are conveyed to a roll-up step to be rolled up into a rolled body 318 of the nonwoven fabric 8.

Here, in the abovementioned first and second examples of the method for producing a mesh body, the corona treatment is applied to the surfaces (layers 5 and 5') of the longitudinal web and the lateral web just before they are laminated crosswise. However, the timing of applying the corona treatment is not limited thereto, and the corona treatment can be applied before the crosswise lamination of the longitudinal web and the lateral web at an optional timing at which improvement of the adhesiveness of the surfaces of the webs can be obtained by the corona treatment.

Each of the abovementioned uniaxially oriented bodies (split web 1, slit web 6 and uniaxially oriented tape 7) has a three-layer structure including a layer of the first thermoplastic resin (PET) and layers of the second thermoplastic resin (amorphous PET copolymer) provided on the respective surfaces of the layer of the first thermoplastic resin. However, the layer structure of the uniaxially oriented body is not limited thereto, and the uniaxially oriented body may have a two-layer structure including a layer of the first thermoplastic resin (PET) and a layer of the second thermoplastic resin (amorphous PET copolymer) provided on one surface of the layer of the first thermoplastic resin.

This two-layer structure of uniaxially oriented body will be described with reference to Figs. 11 to 13.

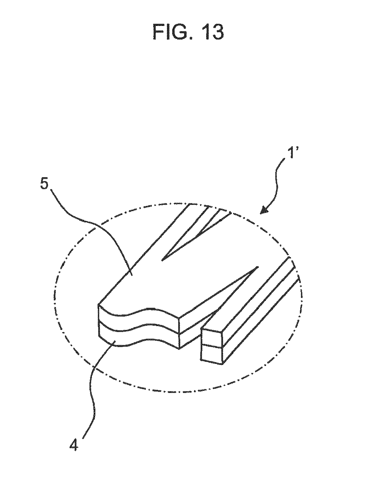

The partial enlarged view shown in FIG. 13 corresponds to the partial enlarged view shown in FIG. 2, and shows a modified example of the split web 1 shown in Figs. 1 and 2.

Differences between this modified example (split web 1') and the split web 1 will be described.

The split web 1' shown in FIG. 13 has a two-layer structure including a layer (main layer) 4 of the first thermoplastic resin (PET) and a layer 5 of the second thermoplastic resin (amorphous PET copolymer) provided on one surface of the layer 4. The layer 5 of the second thermoplastic resin functions as a bonding layer to bond webs when the split web 1' is laminated crosswise with a slit web 6 or a slit web 6', to be described later, at a time of forming a nonwoven fabric 8 (first example of mesh body).

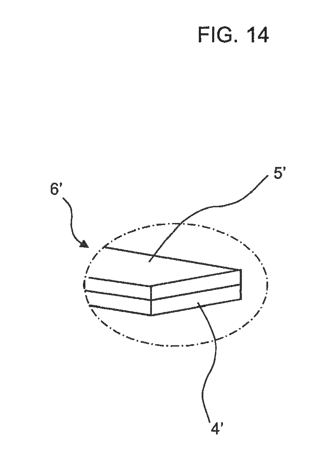

The partial enlarged view shown in FIG. 14 corresponds to the partial enlarged view shown in FIG. 4, and shows a modified example of the slit web 6 shown in Figs. 3 and 4.

Differences between this modified example (slit web 6') and the slit web 6 will be described.

The slit web 6' shown in FIG. 14 has a two-layer structure including a layer (main layer) 4' of the first thermoplastic resin (PET) and a layer 5' of the second thermoplastic resin (amorphous PET copolymer) provided on one surface of the layer 4'. The layer 5' of the second thermoplastic resin functions as a bonding layer to bond webs when the slit web 6' is laminated crosswise with a split web 1 or a split web 1' at a time of forming a nonwoven fabric 8 (first example of mesh body).

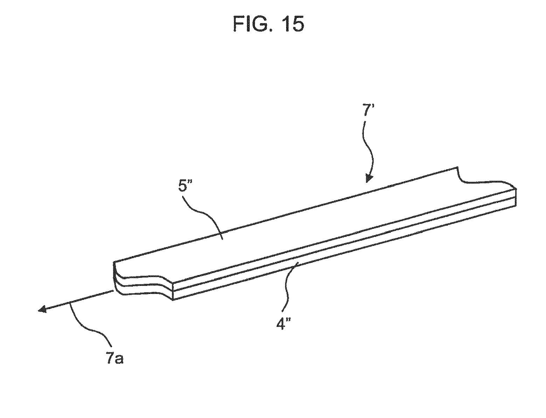

The uniaxially oriented tape 7' shown in FIG. 15 is a modified example of the uniaxially oriented tape 7 shown in FIG. 5.

Differences between this modified example (uniaxially oriented tape 7') and the uniaxially oriented tape 7 will be described.

The uniaxially oriented tape 7' shown in FIG. 15 has a two-layer structure including a layer (main layer) 4" of the first thermoplastic resin (PET) and a layer 5" of the second thermoplastic resin (amorphous PET copolymer) provided on one surface of the layer 4". The layer 5" of the second thermoplastic resin functions as a bonding layer to bond tapes when the uniaxially oriented tapes 7' are laminated crosswise with one another at a time of forming a nonwoven fabric 9 (second example of mesh body). Furthermore, the layer 5" of the second thermoplastic resin functions as a bonding layer to bond tapes when the uniaxially oriented tapes 7' are woven with one another at a time of forming a woven fabric 10 (third example of mesh body).

According to this embodiment, the second thermoplastic resin layers 5, 5' and 5" constituting the bonding layers of the uniaxially oriented bodies (split web 1, 1', slit web 6, 6', and uniaxially oriented tape 7, 7') is an amorphous PET copolymer. Therefore, it is possible to bond the bonding layers of the uniaxially oriented bodies to one another at a temperature lower than the melting point of the main layer (PET), and accordingly, it is possible to form a mesh body (nonwoven fabric 8, 9, or woven fabric 10) while maintaining good orientation of the uniaxially oriented bodies.

Furthermore, according to this embodiment, since the main layer of the uniaxially oriented body (split web 1, 1', slit web 6, 6', or uniaxially oriented tape 7, 7') is made of PET, the produced mesh body (nonwoven fabric 8, 9, or woven fabric 10) can have relatively high heat resistance as compared with a case in which the main layer is made of polyethylene or polypropylene.

Furthermore, according to this embodiment, since the uniaxially oriented body (split web 1, slit web 6, or uniaxially oriented tape 7) has a three-layer structure including a main layer (PET) and bonding layers (amorphous PET copolymer) provided on the respective surfaces of the main layer. Therefore, since one of the bonding layers of each uniaxially oriented body can be a bonding portion for crosswise lamination or waving of the uniaxially oriented bodies, and since the other one of the boding layers can be a boding portion to another member (such as the abovementioned cotton), it is possible to integrate the uniaxially oriented bodies and bond to another member without using an adhesive agent, and the like.

Furthermore, according to this embodiment, a corona treatment is applied on surfaces of the uniaxially oriented bodies (bonding layers made of amorphous PET copolymer) prior to crosswise lamination or waving of the uniaxially oriented bodies. Consequently, since wettability of the bonding layers is improved to improve the adhesiveness, it is possible to obtain a sufficient strength (particularly, peeling strength) of a produced mesh body.

Furthermore, according to this embodiment, in terms of diol component of the amorphous PET copolymer, the ratio (molar ratio) between the comonomer and ethylene glycol is preferably from 9:91 to 50:50, more preferably from 15:85 to 30:70. In other words, the ratio (molar ratio) of the comonomer in the diol component of the amorphous PET copolymer is preferably from 9 mol% to 50 mol%, more preferably from 15 mol% to 30 mol%. Consequently, it is possible to achieve both good adhesiveness of bonding layers and good workability of splitting (split treatment).

### INDUSTRIAL APPLICABILITY

According to the present invention, it is possible to provide a mesh body made of polyethylene terephthalate and having good orientation and relatively high heat resistance, and accordingly, the present invention has high industrial applicability.

### REFERENCE SIGNS LIST

- 1, 1':: split web
- 1 a:: orientation axis
- 2:: main fiber
- 3:: branch fiber
- 4, 4', 4":: layer of first thermoplastic resin
- 5, 5', 5":: layer of second thermoplastic resin
- 6, 6':: slit web
- 6a:: orientation axis
- 7, 7':: uniaxially oriented tape
- 7a:: orientation axis
- 8:: nonwoven fabric
- 9:: nonwoven fabric
- 10:: woven fabric
- 14:: multilayer film
- 15:: oven
- 16:: splitter
- 17:: heat treatment unit
- 18:: rolled body
- 110:: split web (longitudinal web)
- 110a:: original-cloth roll-out roll
- 111:: width-extending step
- 112:: lamination step
- 113:: thermo-compression bonding step
- 113a:: hot cylinder
- 113b, 113c:: mirror surface roll
- 114:: rolled body
- 210:: split web (lateral web)
- 210a:: original-cloth roll-out roll
- 211:: width-extending step
- 314:: multilayer film
- 315:: lateral slit step
- 316:: lateral orientation step
- 317:: thermo-compression bonding step
- 317a:: hot cylinder
- 317b, 317c:: mirror surface roll
- 318:: rolled body
- 410:: split web (longitudinal web)
- 410a:: original-cloth roll-out roll
- 411:: width-extending step
- 500:: corona treatment apparatus
- 501:: high frequency power source
- 502:: controller
- 503:: electrode
- 504:: treatment roll

## Claims

1. A mesh body comprising:
uniaxially oriented bodies each including a main layer made of a first thermoplastic resin and a bonding layer provided on at least one surface of the main layer and made of a second thermoplastic resin having a heat-sealing property at a temperature lower than a melting point of the first thermoplastic resin, the uniaxially oriented bodies being laminated crosswise or woven via the bonding layer so that their orientation axes cross each other to form the mesh body,
wherein the first thermoplastic resin is polyethylene terephthalate, and
wherein the second thermoplastic resin is an amorphous polyethylene terephthalate copolymer.

2. The mesh body according to claim 1, wherein the uniaxially oriented body includes the main layer and the bonding layer provided on each side of the main layer.

3. The mesh body according to claim 1, wherein the bonding layer is applied with a corona treatment prior to the crosswise lamination or the weaving.
